# EUROPEAN PATENT APPLICATION

(11) **EP 4 568 386 A1**
(43) Date of publication of application: **11.06.2025**
(21) Application number: 23851677.7
(22) Date of filing: 03.08.2023
(51) Int. Cl.: H04W 72/04

(54) **INFORMATION INTERACTION METHOD AND APPARATUS IN SIDELINK AND READABLE STORAGE MEDIUM**

(30) Priority: 09.08.2022 CN 202210952504
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Maiwald GmbH
(86) International application number: PCT/CN2023/110940
(87) International publication number: WO 2024/032456

(57) **Abstract**

This application relates to the wireless communication field, and in particular, to a sidelink information exchange method, an apparatus, and a readable storage medium, and is applied to a sidelink communication scenario. The method includes: A UE 1 determines, based on a message sent by a UE 2, whether to share, with the UE 2, all or a part of COT obtained by the UE 1. Alternatively, a UE 1 notifies a UE 2 of all or a part of COT obtained by the UE 1 and a CAPC used by the UE 1 to obtain the COT. The UE 2 determines, based on the CAPC used by the UE 1 to obtain the COT, whether to perform sidelink data transmission by using the COT shared by the UE 1. According to embodiments of this application, unlicensed spectrum resources can be fully utilized in a sidelink scenario.

## Description

This application claims priority to Chinese Patent Application No. 202210952504.8, filed with the China National Intellectual Property Administration on August 9, 2022 and entitled "SIDELINK INFORMATION EXCHANGE METHOD, APPARATUS, AND READABLE STORAGE MEDIUM", which is incorporated herein by reference in its entirety.

### TECHNICAL FIELD

This application relates to the wireless communication field, and in particular, to a sidelink information exchange method, an apparatus, and a readable storage medium.

### BACKGROUND

In a wireless communication system, data communication may be performed between user equipments (user equipments, UEs) via a network device, or data communication may be directly performed between UEs without a network device. An interface between the UEs is referred to as a PC5 interface, and a link between the UEs is referred to as a sidelink (sidelink, SL). A typical application scenario of sidelink communication is vehicle-to-everything (vehicle-to-everything, V2X). In the vehicle-to-everything, each vehicle is a UE, and data transmission may be directly performed between UEs over a sidelink without the network device. In this way, a communication delay can be effectively reduced.

Existing spectrum resources may be classified into two categories: licensed spectrums and unlicensed spectrums. The licensed spectrums can be used only by specified organizations or operators, while the unlicensed spectrums are spectrums shared by different operators or organizations. To fairly use the unlicensed spectrum, before sending data, a device operating in the unlicensed spectrum needs to sense, by using a listen-before-talk (listen-before-talk, LBT) channel contention access mechanism, whether a channel is idle. When the channel is idle, the channel can be occupied for data transmission.

For unlicensed spectrums, how to fully utilize resources on the unlicensed spectrums for sidelink communication is to be researched.

### SUMMARY

Embodiments of this application provide a sidelink information exchange method, an apparatus, and a readable storage medium, so that an unlicensed spectrum resource can be fully utilized in a sidelink scenario. Further, channel occupancy time (channel occupancy time, COT) sharing (COT sharing) information provided by a first communication apparatus can match a communication requirement of a second communication apparatus, to ensure fairness of each device operating in an unlicensed spectrum, and communication quality of a sidelink in the unlicensed spectrum can be improved.

The following describes this application from different aspects. It should be understood that the following implementations and beneficial effects of the different aspects may be mutually referenced.

According to a first aspect, this application provides a sidelink information exchange method. The method includes: A UE 1 (that is, a first communication apparatus) receives a first message from a UE 2 (that is, a second communication apparatus), and the UE 1 determines, based on the first message, whether to send a second message to the UE 2, where the second message carries COT sharing information.

It may be understood that the COT sharing information may be all or a part of COT obtained by the UE 1 by performing a listen-before-talk (listen-before-talk, LBT) channel contention access mechanism. For details about the LBT channel contention access mechanism, refer to the following descriptions. Details are not described herein. The COT sharing information may correspond to a time-frequency resource.

In this application, the UE 1 determines, based on the message sent by the UE 2, whether to share, with the UE 2, the part or all of the COT occupied by the UE 1, and may share remaining COT of the UE 1 with the UE 2, so that an unlicensed spectrum resource is fully utilized in a sidelink scenario.

In a possible implementation, the first message may include channel access priority class (channel access priority class, CAPC) information, where the CAPC information may be used to determine a second CAPC of the UE 2. In this case, that the UE 1 determines, based on the first message, whether to send a second message to the UE 2 includes: The UE 1 determines, based on the second CAPC and a CAPC used by the UE 1 to obtain the COT (denoted as a first CAPC for ease of description), whether to send the second message to the UE 2.

If a priority corresponding to the second CAPC is higher than a priority corresponding to the first CAPC, or a priority corresponding to the second CAPC is the same as a priority corresponding to the first CAPC, the UE 1 determines to send the second message to the UE 2. If a priority corresponding to the second CAPC is lower than a priority corresponding to the first CAPC, the UE 1 determines not to send the second message to the UE 2.

In this application, the UE 2 notifies the UE 1 of the CAPC information of the UE 2 in the first message, so that the UE 1 determines, based on the CAPC used by the UE 1 to obtain the COT and the CAPC of the UE 2, whether to share, with the UE 2, the part or all of the COT occupied by the UE 2. In this way, the COT sharing information provided by the UE 1 matches a communication requirement of the UE 2, to ensure fairness of each device operating in an unlicensed spectrum.

In a possible implementation, the CAPC information may be a value of the second CAPC.

A higher priority corresponding to the CAPC indicates a smaller value of the CAPC. Therefore, in this application, the value of the second CAPC is carried in the first message, so that signaling overheads can be reduced.

In a possible implementation, the CAPC information may include a type of information to be transmitted by the UE 2. The type of the information includes one or more of the following: an SL medium access control control element, an SL signaling radio bearer, or an SL data radio bearer. The type of the information may be used to determine the second CAPC.

In a possible implementation, the first message includes a COT sharing request indication, used to request the UE 1 to provide the COT sharing information.

In a possible implementation, the first message may include information about a first resource, and the information about the first resource indicates that a resource indicated by the COT sharing information is within the first resource. For example, after the UE 1 receives the first message, if there is an intersection between a resource indicated by COT obtained by the UE 1 by performing an LBT procedure and the first resource (denoted as a second resource for ease of description), the UE 1 determines to send the second message to the UE 2, where the second message includes the COT sharing information. The resource indicated by the COT sharing information in the second message may be an intersection between the second resource and the first resource. On the contrary, if there is no intersection between a resource indicated by COT obtained by the UE 1 by performing an LBT procedure (that is, a second resource) and the first resource, the UE 1 determines not to send the second message to the UE 2.

The information about the first resource may include one or more of the following information: carrier information, bandwidth part (bandwidth part, BWP) information, resource pool information, channel information, sub-channel information, time-frequency domain information, frequency domain information, or time domain information.

In this application, the information about the first resource is carried in the first message, to limit the resource indicated by the COT sharing information provided by the UE 1 to be in the first resource, so that the COT sharing information can match a communication requirement of the UE 2, and communication quality of a sidelink in an unlicensed spectrum can be improved.

In a possible implementation, the UE 1 may measure a channel busy ratio (channel busy ratio, CBR) of a resource pool or a carrier indicated by the COT obtained by the UE 1. In this case, that the UE 1 determines, based on the first message, whether to send a second message to the UE 2 includes: If the CBR obtained by the UE 1 through measurement is less than or equal to a CBR threshold, the UE 1 may determine to send the second message to the UE 2. If the CBR obtained by the UE 1 through measurement is greater than the CBR threshold, the UE 1 may determine not to send the second message to the UE 2. The CBR threshold may be predefined in a protocol, may be configured by a base station that provides a service for the UE 1, or may be indicated by CBR threshold information carried in the first message.

The first message includes the CBR threshold information, and the CBR threshold information is used to determine the CBR threshold.

In this application, when the CBR obtained by the UE 1 through measurement is less than or equal to the CBR threshold, the UE 1 determines to send the second message to the UE 2. This can reduce a collision probability when the UE 2 sends data by using the resource indicated by the COT sharing information, to improve communication quality of a sidelink in an unlicensed spectrum.

In a possible implementation, the second message further includes one or more of the following: first indication information or second indication information. The first indication information indicates whether the COT sharing information is used for sidelink transmission with the UE 1. The second indication information indicates a physical channel to which the COT sharing information is applied.

According to a second aspect, this application provides a sidelink information exchange method. The method includes: A UE 2 (that is, a second communication apparatus) sends a first message to a UE 1 (that is, a first communication apparatus), where the first message is used to determine whether to send a second message to the UE 2. The UE 2 receives the second message sent by the UE 1, where the second message carries COT sharing information. Then, the UE 2 performs sidelink communication based on the COT sharing information.

In a possible implementation, that the UE 2 performs sidelink communication based on the COT sharing information includes: The UE 2 sends sidelink data to the UE 1 based on the COT sharing information.

In a possible implementation, after the UE 2 receives the second message sent by the UE 1, the method further includes: The UE 2 sends a third message to a base station (that is, a network device) that provides a service for the UE 2, where the third message carries the COT sharing information.

In a possible implementation, after the UE 2 performs sidelink communication based on the COT sharing information, the method further includes: The UE 2 sends an SL buffer status report to the base station (that is, the network device) that provides the service for the UE 2, where the SL buffer status report may be an SL buffer status report of information to be transmitted that is remained after sidelink communication is performed by using a resource indicated by the COT sharing information.

In a possible implementation, the first message includes CAPC information, and the CAPC information is used to determine a second CAPC of the UE 2.

Optionally, the CAPC information is a value of the second CAPC.

Optionally, the CAPC information includes a type of information to be transmitted by the UE 2. The type of the information includes one or more of the following: an SL medium access control control element, an SL signaling radio bearer, or an SL data radio bearer. The type of the information may be used to determine the second CAPC.

In a possible implementation, the first message includes a COT sharing request indication, used to request the UE 1 to provide the COT sharing information.

In a possible implementation, the first message may include information about a first resource, and the information about the first resource indicates that the resource indicated by the COT sharing information is in the first resource.

In a possible implementation, the first message includes CBR threshold information, and the CBR threshold information is used to determine a CBR threshold.

In a possible implementation, the second message further includes one or more of the following: first indication information or second indication information. The first indication information indicates whether the COT sharing information is used for sidelink transmission with the UE 1. The second indication information indicates a physical channel to which the COT sharing information is applied.

It may be understood that for beneficial effects of the second aspect, refer to the related descriptions of the first aspect. Details are not described herein.

According to a third aspect, this application provides a sidelink information exchange method. The method includes: A UE 2 (that is, a second communication apparatus) receives a fourth message sent by a UE 1 (that is, a first communication apparatus), where the fourth message carries COT sharing information and CAPC information associated with the COT sharing information. Then, the UE 2 determines, based on the CAPC information associated with the COT sharing information, whether to perform sidelink communication by using a resource indicated by the COT sharing information. The COT sharing information is used for sidelink communication.

In this application, the UE 1 shares, with the UE 2, a part or all of COT occupied by the UE 1, and notifies the UE 2 of CAPC information of the UE 1. The UE 2 determines, based on the CAPC information of the UE 1, whether to perform SL communication by using the COT shared by the UE 1. This can fully utilize an unlicensed spectrum resource.

In a possible implementation, that the UE 2 determines, based on the CAPC information associated with the COT sharing information, whether to perform sidelink communication by using a resource indicated by the COT sharing information includes: The UE 2 determines, based on the CAPC information associated with the COT sharing information, a first CAPC associated with the COT sharing information. Then, the UE 2 determines, based on information that is to be transmitted and that is of the UE 2, a CAPC corresponding to the UE 2 (denoted as a second CAPC for ease of description). If a priority corresponding to the second CAPC is higher than a priority corresponding to the first CAPC, or a priority corresponding to the second CAPC is the same as a priority corresponding to the first CAPC, the UE 2 may determine to perform sidelink communication by using the resource indicated by the COT sharing information in the fourth message. If a priority corresponding to the second CAPC is lower than a priority corresponding to the first CAPC, the UE 2 may determine not to perform sidelink communication by using the resource indicated by the COT sharing information.

In this application, the UE 2 determines, by comparing a priority relationship between the CAPC information of the UE 2 and the CAPC information sent by the UE 1, whether to perform sidelink communication by using the resource indicated by the COT sharing information. This can fully utilize an unlicensed spectrum resource, and ensure fairness of each device operating in an unlicensed spectrum, to improve communication quality of a sidelink in the unlicensed spectrum.

In a possible implementation, the CAPC information associated with the COT sharing information is a value of a CAPC used by the UE 1 to obtain the COT, that is, a value of the first CAPC. A higher priority corresponding to the CAPC indicates a smaller value of the CAPC. Therefore, in this application, the value of the first CAPC is carried in the fourth message, so that signaling overheads can be reduced.

In a possible implementation, the method further includes: If the UE 2 determines to perform sidelink communication by using the resource indicated by the COT sharing information, the UE 2 performs sidelink communication based on the COT sharing information.

Optionally, that the UE 2 determines to perform sidelink communication based on the COT sharing information includes: The UE 2 transmits sidelink data to the UE 1 based on the COT sharing information.

In a possible implementation, after the UE 2 receives the fourth message sent by the UE 1, the method further includes: The UE 2 sends a third message to a base station (that is, a network device) that provides a service for the UE 2, where the third message carries the COT sharing information.

In a possible implementation, after the UE 2 performs sidelink communication based on the COT sharing information, the method further includes: The UE 2 sends an SL buffer status report to the base station (that is, the network device) that provides the service for the UE 2, where the SL buffer status report may be an SL buffer status report of information to be transmitted that is remained after the sidelink communication is performed by using the resource indicated by the COT sharing information.

According to a fourth aspect, this application provides a sidelink information exchange method. The method includes: A UE 1 (that is, a first communication apparatus) sends a fourth message to a UE 2 (a second communication apparatus), where the fourth message carries COT sharing information and CAPC information associated with the COT sharing information. The COT sharing information may be used for sidelink communication, and the CAPC information associated with the COT sharing information may be used to determine whether to perform sidelink communication by using a resource indicated by the COT sharing information.

In a possible implementation, the CAPC information associated with the COT sharing information is a value of a CAPC used by the UE 1 to obtain COT, that is, a value of a first CAPC.

In a possible implementation, the fourth message may further include one or more of the following: first indication information or second indication information. The first indication information indicates whether the COT sharing information is used for sidelink transmission with the UE 1. The second indication information indicates a physical channel to which the COT sharing information is applied.

According to a fifth aspect, this application provides a communication apparatus. The communication apparatus is specifically the foregoing first communication apparatus or a chip in the first communication apparatus. The communication apparatus is configured to perform the method in any one of the possible implementations of the first aspect to the fourth aspect. The communication apparatus includes a unit that performs the foregoing method.

According to a sixth aspect, this application provides a communication apparatus. The communication apparatus includes a processor and an interface circuit. The interface circuit is configured to: receive a signal from another communication apparatus and transmit the signal to the processor, or send a signal from the processor to another communication apparatus. The processor is configured to implement the method in any one of the possible implementations of the first aspect to the fourth aspect by using a logic circuit or by executing code instructions.

According to a seventh aspect, this application provides a computer-readable storage medium. The computer-readable storage medium is configured to store a computer program. When the computer program is run on a computer, the method shown in any one of the possible implementations of the first aspect to the fourth aspect is performed.

According to an eighth aspect, this application provides a computer program product. The computer program product includes a computer program or computer code. When the computer program or the computer code is run on a computer, the method shown in any one of the possible implementations of the first aspect to the fourth aspect is performed.

According to a ninth aspect, this application provides a wireless communication system. The wireless communication system includes a first communication apparatus and a second communication apparatus. The first communication apparatus is configured to perform the method shown in any one of the possible implementations of the first aspect or the third aspect, and the second communication apparatus is configured to perform the method shown in any one of the possible implementations of the second aspect or the fourth aspect.

### BRIEF DESCRIPTION OF DRAWINGS

FIG. 1 is a diagram of an architecture of a communication system according to an embodiment of this application;
FIG. 2 is a diagram of a sidelink UE-to-network relay scenario according to an embodiment of this application;
FIG. 3 is a diagram of a sidelink UE-to-UE relay scenario according to an embodiment of this application;
FIG. 4 is a schematic flowchart of performing uplink transmission based on an unlicensed spectrum according to an embodiment of this application;
FIG. 5 is a schematic flowchart in which a base station provides COT sharing information for a UE according to an embodiment of this application;
FIG. 6 is a schematic flowchart of a sidelink information exchange method according to an embodiment of this application;
FIG. 7 is another schematic flowchart of a sidelink information exchange method according to an embodiment of this application;
FIG. 8 is a diagram of a structure of a communication apparatus according to an embodiment of this application; and
FIG. 9 is another diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In embodiments of this application, "one or more of the following items (pieces)" or a similar expression thereof means any combination of these items, including any combination of a single item (piece) or any combination of a plurality of items (pieces). For example, one or more of the following items (pieces): a, b, or c, may indicate a, b, c, a and b, a and c, b and c, or a, b, and c. a, b, and c may be singular or plural. "At least one" means one or more, and "a plurality of" means two or more than two. "And/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects.

In the descriptions of this application, words such as "first" and "second" are merely used to distinguish between different objects, and do not limit quantities and execution sequences. In addition, the words such as "first" and "second" do not indicate a definite difference. In addition, terms such as "include", "have", and any other variants thereof are intended to cover a nonexclusive inclusion. For example, processes, methods, systems, products, or devices that include a series of steps or units are not limited to the listed steps or units, but optionally further include an unlisted step or unit, or optionally further include other inherent steps or units for the processes, methods, products, or devices.

In this application, the word "example", "for example", or the like is used to give an example, an illustration, or a description. Any embodiment or design solution described with "example", "in an example", or "for example" in this application should not be construed as being more preferred or more advantageous than another embodiment or design solution. Exactly, use of the word "example", "in an example", "for example", or the like is intended to present a related concept in a specific manner.

It should be understood that in this application, both "when" and "if" mean that an apparatus performs corresponding processing in an objective case, but are not intended to limit time, do not need the apparatus to necessarily have a determining action during implementation, and do not mean that there is another limitation.

"Simultaneously" in this application may be understood as being at a same time point, may be understood as being in a period of time, or may be understood as being in a same periodicity, and may be specifically understood with reference to a context.

In this application, an element represented in a singular form is intended to indicate "one or more", but not indicate "one and only one", unless otherwise specified.

In addition, terms "system" and "network" in this specification may be used interchangeably.

It should be understood that in embodiments of this application, "B corresponding to A" indicates that B is associated with A, and B may be determined based on A. However, it should be further understood that that B is determined based on A does not mean that B is determined based only on A, and B may alternatively be determined based on A and/or other information.

The technical solutions in embodiments of this application may be applied to a sidelink communication system, or another communication system operating in an unlicensed spectrum (unlicensed spectrum), for example, a long term evolution (long term evolution, LTE) system, a next-generation radio access technology (new radio access NR technology) communication system, or a next-generation wireless local area network (wireless local area network, WLAN) system, or a future communication system operating in an unlicensed spectrum, for example, a 6^{th} generation (6^{th} generation, 6G) system or even a 7^{th} generation (7^{th} generation, 7G) system. It may be understood that "the communication system operating in the unlicensed spectrum" mentioned in this application means that the communication system operates in the unlicensed spectrum in some cases, and it is clear that the communication system may alternatively operate in a licensed spectrum in some other cases.

It should be understood that network architectures and service scenarios described in embodiments of this application are intended to describe the technical solutions in embodiments of this application more clearly, and do not constitute any limitation on the technical solutions provided in embodiments of this application. A person of ordinary skill in the art may learn that with evolution of the communication network architecture and emergence of new services scenario, the technical solutions provided in embodiments of this application are also applicable to similar technical problems.

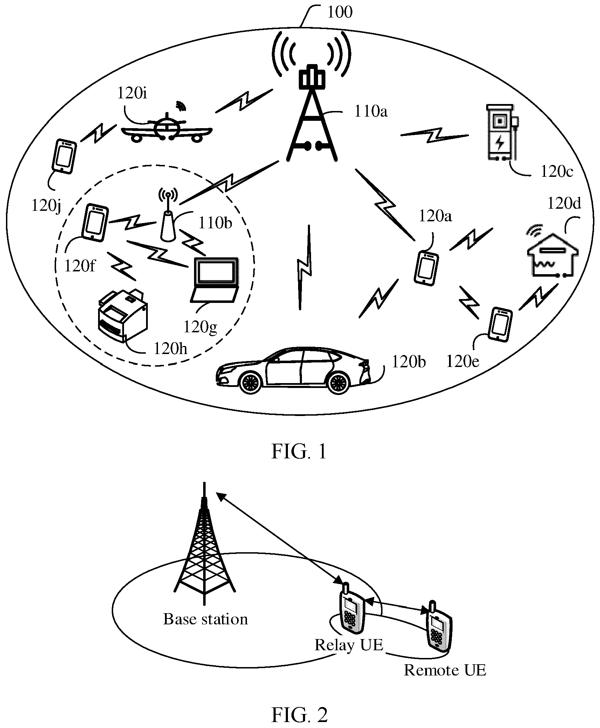

FIG. 1 is a diagram of an architecture of a communication system according to an embodiment of this application. As shown in FIG. 1, the communication system includes a radio access network 100. The radio access network 100 may include at least one radio access network device (for example, 110a and 110b in FIG. 1), and may further include at least one terminal (for example, 120a to 120j in FIG. 1). The terminal may be connected to the radio access network device in a wireless manner. Terminals may be connected to each other in a wired or wireless manner, and radio access network devices may be connected to each other in a wired or wireless manner. It may be understood that FIG. 1 is merely a diagram. The communication system may further include another network device, for example, may further include a core network device, a wireless relay device, and a wireless backhaul device, which are not shown in FIG. 1.

The radio access network device may be referred to as a network device for short, and is an access device that is used by the terminal to access the communication system in the wireless manner. The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a Wi-Fi system, or the like, or may be a module or a unit that implements a part of functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of a part or all of a physical layer. For specific descriptions of the foregoing protocol layers, refer to technical specifications related to a 3^{rd} generation partnership project (3^{rd} generation partnership project, 3GPP). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the base station serves as the radio access network device.

The terminal is a device having a wireless transceiver function, and may send a signal to the base station, or receive a signal from the base station. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed at a location, or may be movable. The base station and the terminal may be deployed on land, for example, may be deployed indoors or outdoors or in a handheld manner or a vehicle-mounted manner, may be deployed on water, or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, a terminal 120i is a base station. However, for the base station 110a, 120i is a terminal. In other words, communication between 110a and 120i is performed based on a wireless air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed over a licensed spectrum, or may be performed over an unlicensed spectrum, or may be performed over the licensed spectrum and the unlicensed spectrum simultaneously. Communication may be performed over a spectrum below 6 gigahertz (gigahertz, GHz), may be performed over a spectrum above 6 GHz, or may be performed over the spectrum below 6 GHz and the spectrum above 6 GHz simultaneously.

This application mainly focuses on a case in which communication between the terminals is performed over the unlicensed spectrum. It may be understood that an interface between the terminals is a PC5 interface, and an interface between the terminal and the base station is a Uu interface. The terminal may perform sidelink communication with another terminal over the unlicensed spectrum, and the communication between the terminal and the terminal device may be unicast communication, multicast communication, or broadcast communication. In the sidelink communication, one or more antennas may be configured for the terminal, to receive and send a message/information/data, and the like. It may be understood that the terminal may further include a plurality of components (for example, a processor, a modulator, a multiplexer, a demodulator, or a demultiplexer) related to message/information/data sending and receiving.

In embodiments of this application, an apparatus configured to implement functions of the terminal may be the terminal, or may be an apparatus that can support the terminal in implementing the functions, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the functions of the terminal is the terminal and the terminal is a UE. Specific technologies and specific device forms that are used for the terminal device are not limited in embodiments of this application.

In some scenarios, the UE may alternatively serve as a base station. For example, the UE may serve as a scheduling entity that provides a sidelink signal between UEs in vehicle-to-everything (vehicle-to-everything, V2X), device-to-device (device-to-device, D2D), peer-to-peer (peer-to-peer, P2P), or the like.

In some scenarios, the UE may alternatively serve as a relay node. For example, the UE may serve as a relay device (a relay) or an integrated access and backhaul (integrated access and backhaul, IAB) node, and is configured to provide a wireless backhaul service for the terminal device.

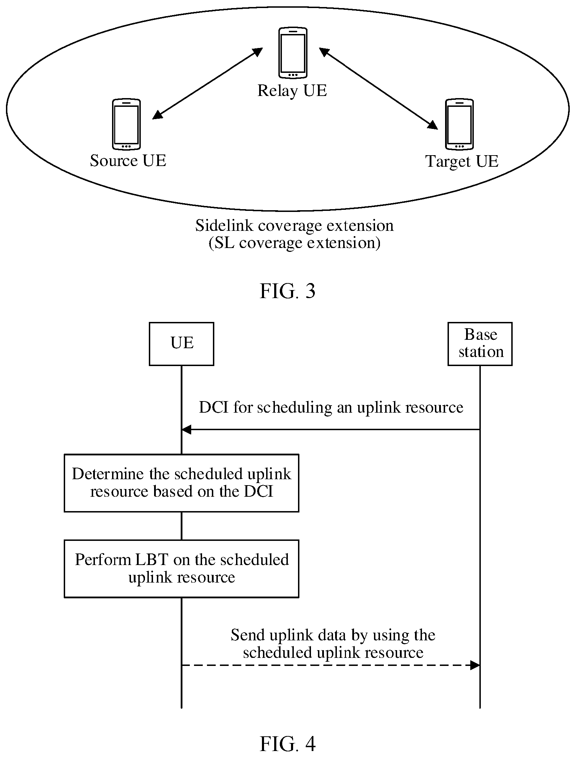

Optionally, a typical application scenario of the sidelink communication is vehicle-to-everything (V2X). A method provided in this application may be applied to the V2X scenario (for example, the foregoing scenario of communication between 120a and 120b in FIG. 1), and may be applied to a sidelink UE-to-network relay (Sidelink UE-to-Network Relay) scenario and a sidelink UE-to-UE relay (Sidelink UE-to-UE Relay) scenario. FIG. 2 is a diagram of a sidelink UE-to-network relay scenario according to an embodiment of this application. As shown in FIG. 2, the sidelink UE-to-network relay scenario includes a remote UE (remote UE) and a relay UE (relay UE), and further includes a base station. A method provided in this application may be applied to communication between the remote UE and the relay UE. FIG. 3 is a diagram of a sidelink UE-to-UE relay scenario according to an embodiment of this application. As shown in FIG. 3, the sidelink UE-to-UE relay scenario includes a source UE (source UE), a relay UE (relay UE), and a target UE (target UE). A method provided in this application may be applied to communication between the source UE and the relay UE and/or communication between the relay UE and the target UE.

In embodiments of this application, the term "wireless communication" may be referred to as "communication" for short, and the term "communication" may alternatively be described as "data transmission", "information transmission, or "transmission".

The following briefly describes several terms related to this application.

### 1. Manners in which a UE obtains a sidelink resource

There are two manners in which the UE obtains the sidelink resource: a base station scheduling mode (also referred to as a mode-1), and an autonomous contention mode (also referred to as a mode-2). When operating in the mode-1, the UE obtains the SL resource from a base station. Specifically, the base station may schedule the SL resource for the UE by using downlink control information (downlink control information, DCI), or configure an SL configured grant (configured grant) for the UE by using a radio resource control (radio resource control, RRC) message. When operating in the mode-2, the UE may receive an SL resource pool configuration from a base station, or obtain an SL resource pool configuration from a preconfiguration, and then select an SL resource from an SL resource pool for sending. Specifically, the SL resource may be selected randomly, or may be selected based on a result of sensing (sensing) or partial sensing (partial sensing).

### 2. Listen-before-talk (listen-before-talk, LBT) channel contention access mechanism

Usually, LBT is performed at a granularity of a channel (for example, a 20 MHz channel). Before sending a signal (for example, a data signal) on a channel, a device may first detect whether the channel is idle, for example, detect whether a nearby device is occupying the channel to send a signal. This detection process may be referred to as clear channel assessment (clear channel assessment, CCA), or may be referred to as a channel access procedure. There are two types of channel access procedures: a first-type channel access procedure and a second-type channel access procedure.

The first-type (a type-1) channel access procedure (which may also be referred to as a fixed duration-based channel access procedure) may be fixed duration-based energy detection. For a specific bandwidth, for example, 20 MHz, if energy of a signal received by a device (the device may be a terminal device or a network device) in fixed duration is less than or equal to a first preset threshold, it is considered that the channel is idle (idle), and the device can perform data transmission by using the idle channel. If energy of a signal received in fixed duration is greater than a first preset threshold, it is considered that the channel is busy (busy), and the device does not perform data transmission by using the busy channel.

The second-type (type-2) channel access procedure (which may also be referred to as a fallback-based channel access procedure) may be fallback mechanism-based energy detection. For a specific bandwidth, a window is defined, where the window defines a range of a quantity of detected slots. A device randomly selects a value A from the window (or a value range). After the device detects at least A idle slots, it is considered that the channel is idle, and the device may perform data transmission by using the idle channel. If there is no idle slot or a quantity of idle slots is less than A, it is considered that the channel is busy, and the device does not perform data transmission by using the busy channel. The idle slot means that energy of a signal received in one slot is less than or equal to a second preset threshold. The first preset threshold and the second preset threshold may be predefined, for example, predefined in a protocol. In addition, values of the first preset threshold and the second preset threshold may be the same or different.

When performing type-1 LBT (the fixed duration-based energy detection) (that is, the first-type channel access procedure), the device needs to determine channel occupancy time (channel occupancy time, COT) based on a channel access priority class (channel access priority class, CAPC). A relationship between the CAPC and the COT is shown in the following Table 1. A 1^{st} column in Table 1 indicates a value of the CAPC, and a smaller value of the CAPC indicates a higher priority corresponding to the CAPC. A 5^{th} column in Table 1 indicates COT magnitudes (unit: millisecond ms) corresponding to different values of the CAPC. It may be understood that, for meanings of other columns in Table 1, refer to an existing standard, for example, a 3^{rd} generation partnership project (3^{rd} generation partnership project, 3GPP) technical specification (technical specification, TS) 37.213 V17.2.0. Details are not provided herein.

**Table 1**

| Channel access priority class (*p*) | m*ₚ* | CW_{min, *p*} | CW_{max, *p*} | T_{m cot, *p*} | Allowed CW*ₚ* sizes |
|---|---|---|---|---|---|
| 1 | 1 | 3 | 7 | 2ms | {3, 7} |
| 2 | 1 | 7 | 15 | 3 ms | {7, 15} |
| 3 | 3 | 15 | 63 | 8 or 10 ms | { 15, 31, 63 } |
| 4 | 7 | 15 | 1023 | 8 or 10 ms | {15, 31, 63, 127, 255, 511, 1023} |

There may be two results for performing the channel access procedure: The channel access procedure is completed (also referred to as an LBT success) and the channel access procedure is not completed (also referred to as an LBT failure). There are a plurality of time domain start positions in a time-frequency resource that can be used for the data transmission. If it is determined that a channel is idle before any time domain start position, it may be considered that the channel access procedure is completed. If it is determined that the channel is busy before all the time domain start positions, it may be considered that the channel access procedure is not completed.

### 3. Unlicensed spectrum-based Uu communication

The Uu communication herein is communication performed between a UE and a base station through an air interface. When both the base station and the UE operate in a licensed spectrum, after the base station schedules an uplink resource for the UE, the UE may perform uplink transmission by directly using the uplink resource. However, when both the base station and the UE operate in an unlicensed spectrum, as shown in FIG. 4, after the base station schedules an uplink resource for the UE, the UE still needs to perform LBT on the uplink resource, and can perform uplink transmission by using the uplink resource only after the LBT succeeds. In other words, if LBT is performed on the scheduled uplink resource, and the LBT fails, the scheduled uplink resource cannot be used.

In a possible implementation, in the unlicensed spectrum-based Uu communication, the base station may include a CAPC in DCI for scheduling the uplink transmission resource, and subsequently the UE performs an LBT procedure based on the CAPC. When the base station does not include the CAPC in the DCI, the UE needs to determine a corresponding CAPC to perform LBT. For example, when the base station does not include the CAPC in the DCI, the UE may perform a type-1 LBT procedure (to be specific, a fixed duration-based channel access procedure) on an uplink transport block (transport block, TB) based on a configured grant (configured grant). Specifically, the UE determines the CAPC in the following manners (the determining is performed sequentially and progressively).

If a TB includes only a MAC control element (control element, CE), a CAPC with a highest priority in the one or more MAC CEs is used. If a TB includes not merely a MAC CE, for example, the TB further includes a common control channel (common control channel, CCCH) service data unit (service data unit, SDU), a CAPC with a highest priority is used (in other words, a value of the CAPC is 1). If a TB includes not merely a MAC CE but does not include a CCCH SDU, for example, the TB further includes a dedicated control channel (dedicated control channel, DCCH) SDU, a CAPC with a highest priority in one or more DCCHs is used. If a TB includes not merely MAC CEs but does not include a CCCH SDU or a DCCH SDU, a CAPC with a lowest priority corresponding to a logical channel (logical channel, LCH) in the TB is used.

CAPCs corresponding to the MAC CE, a signaling radio bearer (signaling radio bearer, SRB), and a data radio bearer (data radio bearer, DRB) may be fixed, or may be configured. Specifically, CAPCs corresponding to a padding (padding) buffer status report (buffer status report, BSR) MAC CE and a recommended bit rate (recommended bit rate) MAC CE are fixed to a CAPC with a lowest priority (in other words, values of the CAPCs are fixed to 4). CAPCs corresponding to an SRB 0, an SRB 1, an SRB 3, and other MAC CEs are fixed to a CAPC with a highest priority. The base station may configure values of corresponding CAPCs for an SRB 2 and the DRB. It may be understood that the LCH includes a CCCH, a DCCH, and a dedicated traffic channel (dedicated traffic channel, DTCH), where the CCCH and the DCCH are associated with the SRB, and the DTCH is associated with the DRB. It may be further understood that that "the CAPC with the lowest priority corresponding to the LCH in the TB is used" may be understood as that "a CAPC with a lowest priority corresponding to the DTCH in the TB is used".

### 4. COT sharing (COT sharing)

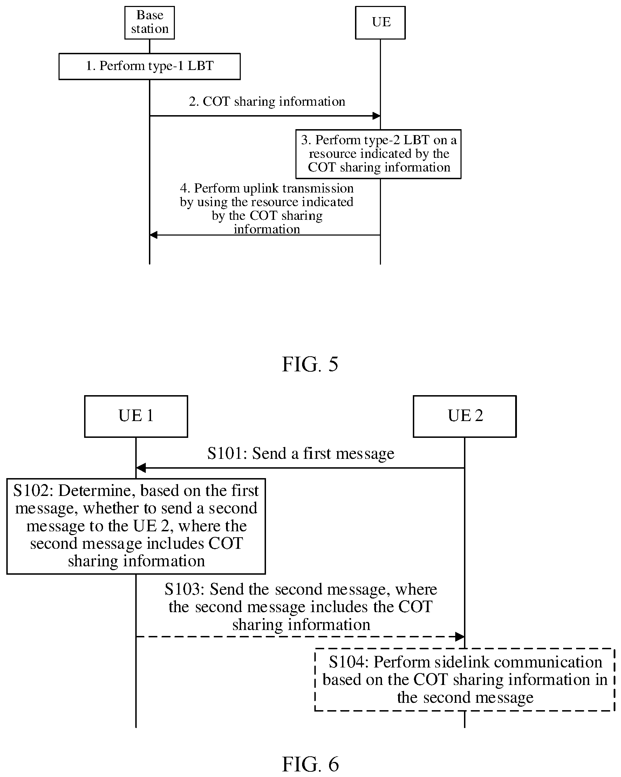

In an unlicensed spectrum-based Uu communication scenario, a base station may schedule an uplink transmission resource or configure an uplink transmission resource for a UE based on COT sharing (COT sharing) information. FIG. 5 is a schematic flowchart in which a base station provides COT sharing information for a UE according to an embodiment of this application. As shown in FIG. 5, the base station may perform type-1 LBT to obtain COT. The base station may further share, with the UE with reference to a scheduling request (scheduling request, SR) or a buffer status report (buffer status report, BSR) reported by the UE, a part of the COT occupied by the base station (that is, the base station provides the COT sharing information for the UE). The UE may perform, according to a specific rule, type-2 LBT on a resource indicated by the COT sharing information, and after the LBT succeeds, may perform uplink transmission by using the resource indicated by the COT sharing information.

It may be understood that for specific content of the COT sharing information, refer to an existing standard, for example, 3GPP TS 37.213 V17.2.0. Details are not described herein.

In unlicensed spectrum-based sidelink communication, the COT sharing may be introduced in consideration of fully utilizing an unlicensed spectrum resource. However, how to perform COT sharing between UEs to fully utilize the unlicensed spectrum resource and ensure that COT sharing information provided by a UE matches a communication requirement of another UE is to be researched.

In view of this, embodiments of this application provide a sidelink information exchange method, an apparatus, and a readable storage medium, so that an unlicensed spectrum resource can be fully utilized in a sidelink scenario. Further, COT sharing information provided by a first communication apparatus (for example, a UE 1) can match a communication requirement of a second communication apparatus (for example, a UE 2), to ensure fairness of each device operating in an unlicensed spectrum, and communication quality of a sidelink in the unlicensed spectrum can be improved.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to constitute a limitation on the protection scope of this application.

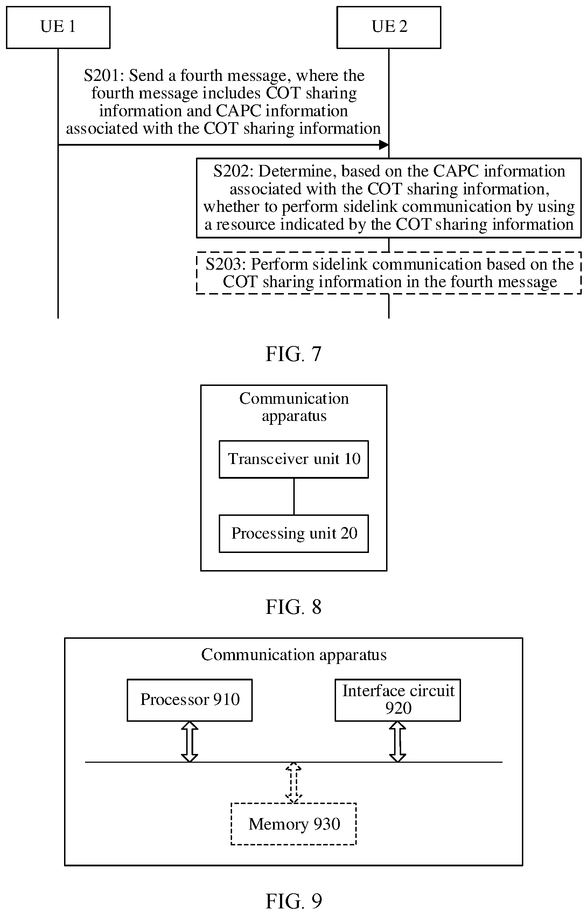

FIG. 6 and FIG. 7 are schematic flowcharts of two sidelink information exchange methods according to embodiments of this application. In the methods, a first communication apparatus may be any terminal in FIG. 1 or a module used in the terminal, and correspondingly, a second communication apparatus is another terminal, in FIG. 1, different from the first communication apparatus or a module used in the terminal. Alternatively, in the methods, a first communication apparatus may be any UE in FIG. 2, for example, the relay UE, and correspondingly, a second communication apparatus is the other UE in FIG. 2, for example, the remote UE. Alternatively, in the methods, a first communication apparatus is any UE in FIG. 3, and correspondingly, a second communication apparatus is another different UE in FIG. 3 communicating with the first communication apparatus. For example, the first communication apparatus is the source UE, and the second communication apparatus is the relay UE; the first communication apparatus is the relay UE, and the second communication apparatus may be the source UE or the target UE; or the first communication apparatus is the target UE, and the second communication apparatus is the relay UE. For ease of description, an example in which a first communication apparatus and a second communication apparatus mentioned below are two different UEs is used, and the two different UEs are respectively represented by a UE 1 and a UE 2.

Embodiment 1: A first communication apparatus (namely, a UE 1) determines, based on a message sent by a second communication apparatus (namely, a UE 2), whether to share, with the second communication apparatus, a part or all of COT occupied by the first communication apparatus.

As shown in FIG. 6, a sidelink information exchange method includes but is not limited to the following steps.

S101: The UE 2 sends a first message to the UE 1.

Correspondingly, the UE 1 receives the first message. Optionally, the first message may include a COT sharing request indication, used to request the UE 1 to provide COT sharing information.

S102: The UE 1 determines, based on the first message, whether to send a second message to the UE 2, where the second message includes the COT sharing information.

In a possible implementation, the first message includes CAPC information, and the CAPC information is used to determine a CAPC of the UE 2 (denoted as a second CAPC for ease of description). The first message may be sidelink control information (sidelink control information, SCI). The first message may be carried by using PC5 RRC signaling, SL MAC CE signaling, or other physical layer signaling. Because the UE 1 needs to determine the COT based on a CAPC of the UE 1 when obtaining the COT, for ease of description, in this application, the CAPC used by the UE 1 to obtain the COT by performing an LBT procedure is denoted as a first CAPC. After receiving the first message, the UE 1 may determine, based on the second CAPC and the first CAPC, whether to send the second message to the UE 2. For example, if a priority corresponding to the second CAPC is higher than a priority corresponding to the first CAPC, or a priority corresponding to the second CAPC is the same as a priority corresponding to the first CAPC, the UE 1 determines to send the second message to the UE 2, where the second message includes the COT sharing information. If a priority corresponding to the second CAPC is lower than a priority corresponding to the first CAPC, the UE 1 determines not to send the second message to the UE 2.

It may be understood that because a higher priority corresponding to a CAPC indicates a smaller value of the CAPC, that the UE 1 determines, based on the second CAPC and the first CAPC, whether to send the second message to the UE 2 may alternatively be determining, by comparing values of the CAPCs, whether to send the second message to the UE 2. For example, if a value of the second CAPC is less than or equal to a value of the first CAPC, the UE 1 determines to send the second message to the UE 2, where the second message includes the COT sharing information. If a value of the second CAPC is greater than a value of the first CAPC, the UE 1 determines not to send the second message to the UE 2.

Optionally, the CAPC information includes a value of the CAPC of the UE 2 (that is, the value of the second CAPC). The UE 2 may determine the value of the CAPC of the UE 2 based on information that is to be transmitted and that is of the UE 2 (or information to be transmitted to the UE 1). For example, the UE 2 may determine the value of the CAPC by using a process of generating a TB through rehearsal. It may be understood that the rehearsal herein may be assumed behavior. The TB generated in a rehearsal manner may be or may not be an actually transmitted TB. In addition, the TB generated in the rehearsal manner may be the same as or different from the actually transmitted TB. If the TB obtained in the rehearsal process includes only one or more SL MAC CEs, it is determined that the value of the CAPC (that is, the value of the second CAPC) is a value of a CAPC with a highest priority in the one or more SL MAC CEs. Otherwise (in other words, if the TB obtained in the rehearsal process includes not only one or more SL MAC CEs), and if the TB obtained in the rehearsal process includes one or more sidelink control channel (sidelink control channel, SCCH) SDUs, it is determined that the value of the CAPC (that is, the value of the second CAPC) is a value of a CAPC with a highest priority (in other words, the value of the CAPC is 1). Otherwise (in other words, if the TB obtained in the rehearsal process includes not only one or more SL MAC CEs and does not include one or more SCCH SDUs), it is determined that the value of the CAPC (that is, the value of the second CAPC) is a value of a CAPC with a lowest priority corresponding to a sidelink traffic channel (sidelink traffic channel, STCH)/an LCH. It may be understood that the TB obtained in the rehearsal process may be generated based on the information that is to be transmitted and that is of the UE 2 or the information to be transmitted to the UE 1. It may be further understood that the information to be transmitted in this application may include all information in the TB, for example, service data, the SL MAC CE, the SCCH SDU, and the STCH SDU.

For another example, the UE 2 determines that the value of the CAPC of the UE 2 (that is, the value of the second CAPC) is a value of a CAPC with a highest priority corresponding to the information that is to be transmitted and that is of the UE 2 (or the information to be transmitted to the UE 1). It may be understood that the value of the CAPC with the highest priority corresponding to the information to be transmitted (or the information to be transmitted to the UE 1) may be a value of a CAPC corresponding to an SL MAC CE to be transmitted and/or a smallest value of the CAPC in values of CAPCs corresponding to a logical channel having service data to be transmitted.

For another example, the UE 2 determines that the value of the CAPC of the UE 2 (that is, the value of the second CAPC) is a value of a CAPC corresponding to a TB that is to be transmitted and that is of the UE 2 (or a TB to be transmitted to the UE 1). It may be understood that the TB to be transmitted (or the TB to be transmitted to the UE 1) may be a TB that needs to be initially transmitted or retransmitted.

It may be understood that the UE 2 notifies the UE 1 of the value of the CAPC of the UE 2. The UE 1 shares, with the UE 2, the part or all of the COT occupied by the UE 1 only when the value of the CAPC of the UE 2 is less than or equal to a value of the CAPC used by the UE 1 to obtain the COT. In this way, the COT sharing information provided by the UE 1 matches a communication requirement of the UE 2, to ensure fairness of each device operating in an unlicensed spectrum, and signaling overheads can be reduced.

Optionally, the CAPC information includes a type of the information to be transmitted by the UE 2. The type of the information includes one or more of the following: an SL MAC CE, an SL SRB, or an SL DRB. For example, if the CAPC information includes the SL MAC CE, it indicates that there is an SL MAC CE that is to be transmitted and that is of the UE 2. Further, the CAPC information may further include information such as a specific SL MAC CE or a quantity of SL MAC CEs in the UE 2. Similarly, if the CAPC information includes the SL SRB, it indicates that there is an SL SRB that is to be transmitted and that is of the UE 2. Further, the CAPC information may further include information such as a specific SL SRB or a quantity of SL SRBs in the UE 2. Further, similarly, if the CAPC information includes the SL DRB, it indicates that there is an SL DRB that is to be transmitted and that is of the UE 2. Further, the CAPC information may further include information such as a specific SL DRB or a quantity of SL DRBs in the UE 2.

Further, optionally, the UE 2 may further send one or more of the following information to the UE 1: CAPC configuration information associated with the SL MAC CE/SL SRB/SL DRB, buffer size (buffer size) information associated with the SL MAC CE/SL SRB/SL DRB, quality of service (quality of service, QoS) information associated with the SL MAC CE/SL SRB/SL DRB, or LCH configuration information. The information may be carried in the first message (for example, the CAPC information in the first message) or another message for sending. This is not limited in this embodiment of this application. Any one of the CAPC configuration information associated with the SL MAC CE/SL SRB/SL DRB, the LCH configuration information, and the QoS information associated with the SL MAC CE/SL SRB/SL DRB may be used to determine the value of the CAPC of the UE 2 (that is, the value of the second CAPC) in combination with the type of the information to be transmitted by the UE 2. When a plurality of UEs 2 send first messages to the UE 1, the buffer size information associated with the SL MAC CE/SL SRB/SL DRB may be used to assist the UE 1 in determining to a UE 2 with which the part or all of the COT occupied by the UE 1 is to be shared.

It may be understood that the LCH configuration information herein may be a part of the LCH configuration information, for example, priority information of an LCH and/or carrier information that can be used to transmit data in the LCH. It may be understood that the LCH configuration information may include one or more of the following information: an LCH identifier (for example, an LCH ID); an LCH configuration index; an identifier of a logical channel group to which the LCH belongs; a related parameter for logical channel priority processing: a priority, a prioritized bit rate (prioritized bit rate, PBR), and token bucket size duration; the carrier information that can be used to transmit the data in the LCH; information about a resource mode that can be used to transmit the data in the LCH, for example, a mode-1 (the mode-1 corresponds to a manner in which a base station schedules a resource), a mode-2 (the mode-2 corresponds to a manner in which the UE selects a resource), or a mode-1 and a mode-2; numerology information of a resource that can be used to transmit the data in the LCH, for example, a subcarrier spacing, a cyclic prefix length, resource time domain duration, and whether the resource is a configured grant resource; a parameter SR-mask for controlling whether the LCH can trigger a scheduling request (scheduling request, SR); or a parameter SR-DelayTimerApplied for controlling whether the LCH can trigger an SR in a delayed manner.

It may be understood that the QoS information may include one or more parameters such as a PC5 interface 5G quality of service identifier (PC5 5G quality of service identifier, PQI), a guaranteed flow bit rate (guaranteed flow bit rate, GFBR), and a maximum flow bit rate (maximum flow bit rate, MFBR).

For example, if the type of the information included in the CAPC information includes only one or more SL MAC CEs, the UE 1 determines that the value of the CAPC of the UE 2 (that is, the value of the second CAPC) is the value of the CAPC with the highest priority in the one or more SL MAC CEs. Otherwise (in other words, if the type of the information included in the CAPC information includes not only the one or more SL MAC CEs), and if the type of the information included in the CAPC information includes the SL SRB, the UE 1 determines that the value of the CAPC of the UE 2 (that is, the value of the second CAPC) is the value of the CAPC with the highest priority (in other words, the value of the CAPC is 1). Otherwise (in other words, if the type of the information included in the CAPC information does not include the SL SRB, but includes the SL DRB), and the UE 1 determines that the value of the CAPC of the UE 2 (that is, the value of the second CAPC) is the value of the CAPC with the lowest priority corresponding to the LCH.

For another example, if the type of the information included in the CAPC information includes only one or more SL MAC CEs, the UE 1 determines that the value of the CAPC of the UE 2 (that is, the value of the second CAPC) is a value that is of a CAPC and that is determined based on the QoS information associated with the one or more SL MAC CEs. Otherwise (in other words, if the type of the information included in the CAPC information includes not only the one or more SL MAC CEs), and if the type of the information included in the CAPC information includes the SL SRB, the UE 1 determines that the value of the CAPC of the UE 2 (that is, the value of the second CAPC) is a value that is of a CAPC and that is determined based on the QoS information associated with the SL SRB. Otherwise (in other words, if the type of the information included in the CAPC information does not include the SL SRB, but includes the SL DRB), and the UE 1 determines that the value of the CAPC of the UE 2 (that is, the value of the second CAPC) is a value that is of a CAPC and that is determined based on the QoS information associated with the SL DRB. That the value of the CAPC is determined based on the QoS information may be that the value of the CAPC corresponding to the QoS information is determined based on a mapping relationship between the PQI and the CAPC. It may be understood that, if it may be determined, based on the mapping relationship between the PQI and the CAPC, that the QoS information corresponds to values of a plurality of CAPCs, the value of the CAPC (that is, the value of the second CAPC) determined based on the QoS information may be a smallest value of the CAPC in the values of the plurality of CAPCs.

For another example, the QoS information may be used to determine the value of the CAPC of the UE 2 (that is, the value of the second CAPC), and is not combined with other information. If the first message further carries the QoS information, the UE 1 may determine the value of the CAPC of the UE 2 (that is, the value of the second CAPC) based on the QoS information. For example, the UE 1 determines, based on the mapping relationship between the PQI and the CAPC, the value of the CAPC corresponding to the QoS information sent by the UE 2. It may be understood that if the UE 1 may determine, based on the mapping relationship between the PQI and the CAPC, that the QoS information corresponds to values of a plurality of CAPCs, the value of the CAPC of the UE 2 (that is, the value of the second CAPC) may be a smallest value of the CAPC in the values of the plurality of CAPCs.

Optionally, the first message may further include a priority corresponding to the information/TB that is to be transmitted and that is of the UE 2 (or the information/TB to be transmitted to the UE 1). It may be understood that the priority herein is a transmission priority used for a sidelink.

It may be understood that the UE 1 and the UE 2 in this embodiment of this application may not be provided with a service by a same network device. In this case, CAPC configuration information in the UE 1 (such as a CAPC corresponding to a MAC CE, a DRB, or an SRB) may be different from CAPC configuration information in the UE 2. Therefore, in this embodiment of this application, the UE 2 notifies the UE 1 of the information used to determine the second CAPC, instead of directly notifying the value of the CAPC of the UE 2, so that both the first CAPC and the second CAPC are determined based on same CAPC configuration information (that is, the CAPC configuration information in the UE 1). In this way, accuracy of comparing priorities corresponding to CAPCs is improved, and the COT sharing information provided by the UE 1 better matches the communication requirement of the UE 2.

Optionally, if the UE 1 receives the first messages sent by the plurality of UEs 2, the UE 1 may choose to preferentially send the second message to a target UE 2 or send the second message only to the target UE 2, where the second message includes the COT sharing information. Further, optionally, the first message may further include resource reservation information of the UE 2. If the UE 1 receives the first messages sent by the plurality of UEs 2 and pieces of resource reservation information included in the plurality of first messages overlap, the UE 1 may choose to preferentially send the second message to the target UE 2 or send the second message only to the target UE 2, where the second message includes the COT sharing information. It is clear that a priority corresponding to the CAPC of the target UE 2 (that is, the second CAPC) is higher than or equal to a priority corresponding to the CAPC used by the UE 1 to obtain the COT (that is, the first CAPC).

The target UE 2 herein may be a UE 2 whose CAPC (that is, the second CAPC) corresponds to a highest priority in the plurality of UEs 2. When priorities corresponding to CAPCs of the plurality of UEs 2 are the same, the target UE 2 herein may be a UE 2 whose information to be transmitted corresponds to a highest priority in the plurality of UEs 2. The target UE 2 herein may alternatively be a UE 2 whose information to be transmitted corresponds to a highest priority in the plurality of UEs 2. When priorities corresponding to the information that is to be transmitted and that is of the plurality of UEs 2 are the same, the target UE 2 herein may be a UE 2 whose CAPC (that is, the second CAPC) corresponds to a highest priority in the plurality of UEs 2. The priority herein may be a transmission priority, the information to be transmitted may be the TB to be transmitted, and the information to be transmitted may be the information to be transmitted to the UE 1.

In another possible implementation, the first message includes information about a first resource, and the information about the first resource indicates that a resource indicated by the COT sharing information is within the first resource. After the UE 1 receives the first message, if there is an intersection between a resource indicated by COT obtained by the UE 1 by performing an LBT procedure (denoted as a second resource for ease of description) and the first resource, the UE 1 determines to send the second message to the UE 2, where the second message includes the COT sharing information. The resource indicated by the COT sharing information in the second message may be the intersection between the second resource and the first resource. On the contrary, if there is no intersection between a resource indicated by COT obtained by the UE 1 by performing an LBT procedure (that is, a second resource) and the first resource, the UE 1 determines not to send the second message to the UE 2. In other words, after receiving the first message, the UE 1 shares, with the UE 2, a part or all of the COT occupied by the UE 1 only when there is the intersection between the resource indicated by the COT obtained by the UE 1 (that is, the second resource) and the first resource. It is clear that, after receiving the first message, the UE 1 may occupy the first resource as many as possible in a subsequent LBT procedure.

For example, the information about the first resource may include one or more of the following information: carrier information, bandwidth part (bandwidth part, BWP) information, resource pool information, channel information, sub-channel information, time-frequency domain information, frequency domain information, or time domain information.

It may be understood that, in this embodiment of this application, the information about the first resource is carried in the first message, to limit the resource indicated by the COT sharing information provided by the UE 1 to be in the first resource, so that the COT sharing information can match the communication requirement of the UE 2, and communication quality of the sidelink in the unlicensed spectrum can be improved.

In still another possible implementation, the UE 1 may measure a channel busy ratio (channel busy ratio, CBR) of a resource pool or a carrier indicated by the COT obtained by the UE 1. After receiving the first message (the first message includes the COT sharing request indication, used to request the UE 1 to provide the COT sharing information), the UE 1 may compare a magnitude relationship between the CBR obtained by the UE 1 through measurement and a CBR threshold. If the CBR obtained through measurement is less than or equal to the CBR threshold, the UE 1 may determine to send the second message to the UE 2, where the second message includes the COT sharing information. If the CBR obtained through measurement is greater than the CBR threshold, the UE 1 may determine not to send the second message to the UE 2. The CBR threshold may be predefined in a protocol, may be configured by a network device that provides a service for the UE 1, or may be indicated by CBR information carried in the first message. It may be understood that the network device that provides the service for the UE 1 may also provide a service for the UE 2. This is not limited in this embodiment of this application.

In this embodiment of this application, when the CBR obtained by the UE 1 through measurement is less than or equal to the CBR threshold, the UE 1 determines to send the second message to the UE 2. This can reduce a collision probability when the UE 2 sends data by using the resource indicated by the COT sharing information, to improve the communication quality of the sidelink in the unlicensed spectrum.

It may be understood that the foregoing three implementations may be implemented separately or in combination. For example, the second implementation and the third implementation are implemented in combination. In this case, when there is the intersection between the resource indicated by the COT obtained by the UE 1 (that is, the second resource) and the first resource, and the CBR obtained through measurement is less than or equal to the CBR threshold, the UE 1 determines to send the second message to the UE 2, where the second message includes COT sharing information, and the resource indicated by the COT sharing information in the second message may be the intersection between the second resource and the first resource. It is clear that the foregoing three implementations may alternatively be combined in another manner. Details are not listed one by one herein. When at least two of the foregoing three implementations are implemented in combination, it may be determined to send the second message to the UE 2 only when all the implementations are met, or it may be determined to send the second message to the UE 2 when any one of the implementations is met. This is not limited in this embodiment of this application.

Optionally, if the UE 1 determines not to send the second message to the UE 2, the UE 1 may ignore the first message, or return a rejection message to the UE 2, where the rejection message indicates to reject to provide the COT sharing information, or the like. In this embodiment of this application, behavior performed after the UE 1 determines not to send the second message to the UE 2 is not limited.

Optionally, if the UE 1 (UE 1) determines, based on the first message, that the second message needs to be sent to the UE 2 (UE 2), the sidelink information exchange method further includes the following one or more steps.

S103: The UE 1 sends the second message to the UE 2, where the second message includes the COT sharing information.

Correspondingly, the UE 2 receives the second message.

Optionally, the COT sharing information carried in the second message may be all or the part of the COT obtained by the UE 1 by performing the LBT procedure. The second message may be carried by using PC5 RRC signaling, SL MAC CE signaling, SCI signaling, or other physical layer signaling.

Optionally, the second message may further include one or more of the following: first indication information or second indication information. Alternatively, after sending the second message to the UE 2, the UE 1 may further send one or more of the following information to the UE 2: first indication information or second indication information. In other words, the first indication information and the second indication information may be carried in the second message for sending, or may be carried in another message for sending. It is clear that the first indication information and the second indication information may alternatively be carried in different messages for sending. This is not limited in this embodiment of this application.

The first indication information indicates whether the COT sharing information carried in the second message is used for sidelink transmission with the UE 1, or the first indication information indicates whether the COT sharing information can be used only for sidelink transmission with the UE 1. The second indication information indicates a physical channel to which the COT sharing information carried in the second message is applied. Herein, the physical channel to which the COT sharing information is applied includes one or more of the following: a physical sidelink control channel (physical sidelink control channel, PSCCH), a physical sidelink shared channel (physical sidelink shared channel, PSSCH), a physical sidelink feedback channel (physical sidelink feedback channel, PSFCH), and a physical sidelink broadcast channel (physical sidelink broadcast channel, PSBCH).

Optionally, the UE 1 may send the second message to the UE 2 in a unicast manner. It may be understood that in a case of unicast, a unicast connection established by the UE 1 and the UE 2 may be established on the sidelink in the unlicensed spectrum. The UE 1 may alternatively send the second message in a multicast or broadcast manner. In this case, the second message may be carried by using a dedicated destination layer 2 identifier (destination L2 ID).

S104: The UE 2 performs sidelink communication based on the COT sharing information in the second message.

Optionally, after the UE 2 receives the second message, if a resource indicated by a sidelink grant (SL grant) obtained by the UE 2 and the resource indicated by the COT sharing information overlap, the UE 2 preferentially chooses or can only choose to send sidelink data to the UE 1 on the resource indicated by the COT sharing information. In an example, when the first indication information received by the UE 2 indicates that the COT sharing information is used for the sidelink transmission with the UE 1 or can be used only for the sidelink transmission with the UE 1, the UE 2 determines whether the resource indicated by the sidelink grant and the resource indicated by the COT sharing information overlap. It may be understood that the overlapping herein may mean that the resource indicated by the sidelink grant is included in the resource indicated by the COT sharing information.

Optionally, after receiving the second message, the UE 2 may send a third message to the network device that provides the service for the UE 2, where the third message carries the COT sharing information. After receiving the third message, the network device may schedule or configure a sidelink resource for the UE 2 based on the resource indicated by the COT sharing information and resource usage monitored by the network device. The UE 2 performs sidelink communication based on the sidelink resource scheduled or configured by the network device. Optionally, the UE 2 may further send one or more of the following information to the network device: the first indication information or the second indication information. It may be understood that the first indication information and the second indication information may be carried in the third message for sending, or may be carried in another message for sending. It is clear that the first indication information and the second indication information may alternatively be carried in different messages for sending. This is not limited in this embodiment of this application.

It may be understood that when the UE 2 operates in the mode-1 (to be specific, the base station scheduling mode), the sidelink resource for the UE 2 needs to be scheduled or configured by the network device. Therefore, although the UE 1 shares the part or all of the COT of the UE 1 with the UE 2, the UE 2 cannot directly use the COT. Instead, the UE 2 notifies the network device of the COT, and the network device schedules or configures the sidelink resource for the UE 2 based on the COT. In comparison with a case in which after receiving the COT sharing information, the UE 2 directly performs sidelink communication by using the resource indicated by the COT sharing information, the collision probability can be reduced (or a transmission failure probability can be reduced). This is because a device that can be sensed by the UE 1 may not be completely consistent with a device that can be sensed by the UE 2. In this case, there may be a device (assumed to be a target device) that cannot be sensed by the UE 1 in the device that can be sensed by the UE 2. Alternatively, resource usage sensed by the UE 1 is not completely consistent with the resource usage sensed by the network device (which is the network device that provides the service for the UE 2). In this case, if the sidelink data is sent by directly using the resource indicated by the COT sharing information, a collision may occur with the sending of data performed the target device. Therefore, in this embodiment of this application, the UE 2 notifies the network device of the COT sharing information sent by the UE 1, and the network device performs unified scheduling or configuration. This can reduce the collision probability.

Optionally, after performing sidelink communication based on the COT sharing information in the second message (that is, after step S104), the UE 2 may send an SL BSR/SL SR to the network device, where the SL BSR/SL SR may be an SL BSR/SL SR corresponding to information to be transmitted that is remained after sidelink communication is performed by using the resource indicated by the COT sharing information. It may be understood that when a magnitude of the information to be transmitted that is remained after sidelink communication is performed by using the resource indicated by the COT sharing information is 0, that is, there is no remained information to be transmitted, the UE 2 may notify, by using the SL BSR/SL SR, the network device that an SL buffer status of the UE 2 changes (or the information to be transmitted changes), so that the network device learns of the SL buffer status of the UE 2 in time, to reduce meaningless sidelink resource scheduling. When a magnitude of the information to be transmitted that is remained after sidelink communication is performed by using the resource indicated by the COT sharing information is not 0, the UE 2 may request, by using the SL BSR/SL SR, the network device to configure or schedule a sidelink resource for the remained information that is to be transmitted and that is of the UE 2.

Optionally, when or after the UE 2 receives the second message, if sending of an SL BSR/SL SR in the UE 2 is not completed, the UE 2 may cancel behavior of sending an SL BSR/SL SR, for example, discard a generated SL BSR/SL SR, stop to generate an SL BSR/SL SR, stop to send an SL BSR/SL SR, or cancel an SL BSR/SL SR event.

In this embodiment of this application, the UE 2 sends the message to the UE 1, where the message is used to request the UE 1 to provide the COT sharing information. The UE 1 shares, with the UE 2 based on the message sent by the UE 2, the part or all of the COT occupied by the UE 1. This can fully utilize an unlicensed spectrum resource in a sidelink scenario. In addition, in some scenarios, for unlicensed spectrum-based communication, COT used by a device needs to match an actual CAPC. For example, COT determined by the device based on that a value of a CAPC is 2 can be used only for a CAPC whose value is less than or equal to 2, and cannot be used for a CAPC whose value is greater than 2. In other words, COT determined by the device based on a CAPC with a first priority can be used only for a CAPC whose priority is higher than or the same as the first priority, and cannot be used for a CAPC whose priority is lower than the first priority. This is because it is unfair for another device operating in the unlicensed spectrum to transmit a low-priority CAPC service by using COT determined by using a CAPC with a high priority.

Therefore, in this embodiment of this application, the message further carries the CAPC information, the information about the first resource, the CBR threshold, or the like. The UE 1 determines, based on the message, whether the UE 1 can share, with the UE 2, the part or all of the COT occupied by the UE 1. In this way, the COT sharing information provided by the UE 1 can match the communication requirement of the UE 2, to ensure the fairness of each device operating in the unlicensed spectrum, and the communication quality of the sidelink in the unlicensed spectrum can be improved.

Embodiment 2: A UE 1 shares, with a UE 2, a part or all of COT occupied by the UE 1, and the UE 2 determines whether to perform SL communication by using the COT shared by the UE 1.

As shown in FIG. 7, a sidelink information exchange method includes but is not limited to the following steps.

S201: The UE 1 sends a fourth message to the UE 2, where the fourth message includes COT sharing information and CAPC information associated with the COT sharing information.

Correspondingly, the UE 2 receives the fourth message.

Optionally, the UE 1 operating in an unlicensed spectrum performs channel access to obtain COT, and performs data transmission in the COT of the UE 1. If the COT does not end after the UE 1 completes the data transmission, the UE 1 may share the remaining part of the COT with the UE 2. It is clear that, after obtaining the COT, the UE 1 may alternatively directly share a part of the COT with the UE 2, and does not need to share the remaining part of the COT with the UE 2 after the UE 1 completes the data transmission. Alternatively, after obtaining the COT, the UE 1 does not perform data transmission, and shares all the COT with the UE 2. Time at which the UE 1 shares, with the UE 2, the part or all of the COT occupied by the UE 1 is not limited in this embodiment of this application.

Optionally, the UE 1 sends the fourth message to the UE 2, where the fourth message includes the COT sharing information and the CAPC information associated with the COT sharing information. For example, the fourth message may be carried by using PC5 RRC signaling, SL MAC CE signaling, SCI signaling, or other physical layer signaling. The COT sharing information is a part or all of COT obtained by the UE 1 by performing an LBT procedure. The CAPC information associated with the COT sharing information is a value of a CAPC used by the UE 1 to obtain the COT. For ease of description, in this application, the CAPC used by the UE 1 to obtain the COT by performing the LBT procedure is denoted as a first CAPC. The CAPC information associated with the COT sharing information is a value of the first CAPC.

Optionally, the UE 1 may further send one or more of the following information to the UE 2: first indication information or second indication information. One or more of the first indication information and the second indication information may be carried in the fourth message, or may be carried in another message. This is not limited in this embodiment of this application. For meanings of the first indication information and the second indication information, refer to the descriptions in Embodiment 1. Details are not described herein.

Optionally, the UE 1 may send the fourth message to the UE 2 in a unicast manner. It may be understood that in a case of unicast, a unicast connection established by the UE 1 and the UE 2 may be established on a sidelink in the unlicensed spectrum. Alternatively, the UE 1 may send the fourth message in a multicast or broadcast manner. In this case, the fourth message may be carried by using a dedicated destination layer 2 identifier.

S202: The UE 2 determines, based on the CAPC information associated with the COT sharing information, whether to perform sidelink communication by using a resource indicated by the COT sharing information.

Optionally, the UE 2 may determine a value of a CAPC of the UE 2 based on information that is to be transmitted and that is of the UE 2 (or information to be transmitted to the UE 1). For a specific determining manner, refer to the related descriptions in Embodiment 1. Details are not described herein. For ease of description, the CAPC of the UE 2 is denoted as a second CAPC, and the value of the CAPC of the UE 2 is denoted as a value of the second CAPC. If a priority corresponding to the second CAPC is higher than a priority corresponding to the first CAPC (for example, the value of the second CAPC is greater than the value of the first CAPC), or a priority corresponding to the second CAPC is the same as a priority corresponding to the first CAPC (for example, the value of the second CAPC is equal to the value of the first CAPC), the UE 2 may determine to perform sidelink communication by using the resource indicated by the COT sharing information in the fourth message. If a priority corresponding to the second CAPC is lower than a priority corresponding to the first CAPC (for example, the value of the second CAPC is less than the value of the first CAPC), the UE 2 may determine not to perform sidelink communication by using the resource indicated by the COT sharing information.

Optionally, if the UE 2 determines not to perform sidelink communication by using the resource indicated by the COT sharing information, the UE 2 may discard/ignore (ignore) the COT sharing information, send a failure/rejection message to the UE 1, where the failure/rejection message indicates that the COT sharing information is not used, or send a first message to the first communication apparatus, where the first message includes the CAPC information, and the first message may be used to request the UE 1 to provide COT sharing information. For details, refer to the related descriptions in Embodiment 1. Details are not described herein. In this embodiment of this application, behavior of the UE 2 after the UE 2 determines not to use the resource indicated by the COT sharing information is not limited.

Optionally, if the UE 2 determines to perform sidelink communication by using the resource indicated by the COT sharing information, the sidelink information exchange method further includes the following one or more steps.

S203: The UE 2 performs sidelink communication based on the COT sharing information in the fourth message.

Optionally, for an implementation of step S203 in this embodiment of this application, refer to the implementation of step S104 in Embodiment 1. Details are not described herein.

In this embodiment of this application, the UE 1 shares, with the UE 2, the part or all of the COT occupied by the UE 1 and notifies the UE 2 of the CAPC used by the UE 1 to obtain the COT, and the UE 2 determines a priority relationship between the CAPC of the UE 2 and the CAPC used by the UE 1 to obtain the COT and determines whether SL communication can be performed based on the COT shared by the UE 1. An unlicensed spectrum resource can be fully utilized, and fairness of each device operating in the unlicensed spectrum can be ensured. In addition, communication quality of the sidelink in the unlicensed spectrum can be improved.

It may be understood that to implement functions in the foregoing embodiments, the first communication apparatus (that is, the UE 1) and the second communication apparatus (UE 2) include corresponding hardware structures and/or software modules for performing the functions. A person skilled in the art should be easily aware that in combination with the units and the method steps in the examples described in embodiments disclosed in this application, this application can be implemented by using hardware or a combination of the hardware and computer software. Whether a function is performed by hardware or hardware driven by computer software depends on particular application scenarios and design constraints of the technical solutions.

FIG. 8 is a diagram of a structure of a communication apparatus according to an embodiment of this application. The communication apparatus may be configured to implement a function of the first communication apparatus (that is, the UE 1) or the second communication apparatus (that is, the UE 2) in the foregoing method embodiments. Therefore, the beneficial effects of the foregoing method embodiments can also be implemented. In this embodiment of this application, the communication apparatus may be one of the terminals 120a to 120j shown in FIG. 1, or may be a module (for example, a chip) used in the terminal.

As shown in FIG. 8, the communication apparatus includes a transceiver unit 10 and a processing unit 20. The communication apparatus is configured to implement a function of the first communication apparatus (that is, the UE 1) or the second communication apparatus (that is, the UE 2) in the method embodiment shown in FIG. 6 or FIG. 7.

When the communication apparatus is configured to implement the function of the first communication apparatus (that is, the UE 1) in the method embodiment shown in FIG. 6, the transceiver unit 10 is configured to receive a first message from a second communication apparatus. The processing unit 20 is configured to determine, based on the first message, whether to send a second message to the second communication apparatus, where the second message includes COT sharing information.

In a possible implementation, the first message includes CAPC information, and the CAPC information is used to determine a second CAPC of the second communication apparatus. The processing unit 20 is specifically configured to determine, based on the second CAPC and a first CAPC, whether to send the second message to the second communication apparatus, where the first CAPC is a CAPC used by the first communication apparatus to obtain COT.

In a possible implementation, the processing unit 20 is specifically configured to: when a priority corresponding to the second CAPC is higher than a priority corresponding to the first CAPC, or a priority corresponding to the second CAPC is the same as a priority corresponding to the first CAPC, determine to send the second message to the second communication apparatus; or when a priority corresponding to the second CAPC is lower than a priority corresponding to the first CAPC, determine not to send the second message to the second communication apparatus.

In a possible implementation, the processing unit 20 is specifically configured to: when a CBR obtained through measurement is less than or equal to a CBR threshold, determine to send the second message to the second communication apparatus; or when a CBR obtained through measurement is greater than the CBR threshold, determine not to send the second message to the second communication apparatus.

When the communication apparatus is configured to implement the function of the second communication apparatus (that is, the UE 2) in the method embodiment shown in FIG. 6, the transceiver unit 10 is configured to send a first message to the first communication apparatus, where the first message is used to determine whether to send a second message to the second communication apparatus. The transceiver unit 10 is further configured to receive the second message sent by the first communication apparatus, where the second message includes COT sharing information. The processing unit 20 is configured to perform sidelink communication based on the COT sharing information.

In a possible implementation, the processing unit 20 is specifically configured to send sidelink data to the first communication apparatus based on the COT sharing information.

In a possible implementation, the transceiver unit 10 is further configured to send a third message to a network device, where the third message includes the COT sharing information.

In a possible implementation, the transceiver unit 10 is further configured to send an SL BSR to the network device, where the SL BSR is an SL BSR of data that is to be transmitted and that is remained after sidelink communication is performed by using the COT sharing information.

It may be understood that for specific descriptions of the first message, the second message, the third message, and the like, refer to the foregoing method embodiments. Details are not described one by one herein again.

It may be understood that for more detailed descriptions of the transceiver unit 10 and the processing unit 20, refer to the related descriptions in the method embodiment shown in FIG. 6.

When the communication apparatus is configured to implement the function of the first communication apparatus (that is, the UE 1) in the method embodiment shown in FIG. 7, the transceiver unit 10 is configured to send a fourth message to the second communication apparatus, where the fourth message includes COT sharing information and CAPC information associated with the COT sharing information, the COT sharing information is used for sidelink communication, and the CAPC information associated with the COT sharing information is used to determine whether to perform sidelink communication by using a resource indicated by the COT sharing information.

When the communication apparatus is configured to implement the function of the second communication apparatus (that is, the UE 2) in the method embodiment shown in FIG. 7, the transceiver unit 10 is configured to receive a fourth message sent by the first communication apparatus, where the fourth message includes COT sharing information and CAPC information associated with the COT sharing information, and the COT sharing information is used for sidelink communication. The processing unit 20 is configured to determine, based on the CAPC information associated with the COT sharing information, whether to perform sidelink communication by using a resource indicated by the COT sharing information.

In a possible implementation, the processing unit 20 is specifically configured to: determine, based on the CAPC information associated with the COT sharing information, a first CAPC associated with the COT sharing information; and when a priority corresponding to a second CAPC is higher than a priority corresponding to the first CAPC, or a priority corresponding to a second CAPC is the same as a priority corresponding to the first CAPC, determine to perform sidelink communication by using the resource indicated by the COT sharing information, where the second CAPC is a CAPC corresponding to data that is to be transmitted and that is of the second communication apparatus; or when a priority corresponding to a second CAPC is lower than a priority corresponding to the first CAPC, determine not to perform sidelink communication by using the resource indicated by the COT sharing information.

In a possible implementation, the processing unit 20 is further configured to: when determining to perform sidelink communication by using the resource indicated by the COT sharing information, perform sidelink communication based on the COT sharing information.

In a possible implementation, the processing unit 20 is further specifically configured to transmit sidelink data to the first communication apparatus based on the COT sharing information.

In a possible implementation, the transceiver unit 10 is further configured to send a third message to a network device, where the third message includes the COT sharing information.

In a possible implementation, the transceiver unit 10 is further configured to send an SL BSR to a network device, where the SL BSR is an SL BSR of data that is to be transmitted and that is remained after sidelink communication is performed by using the COT sharing information.

It may be understood that for specific descriptions of the fourth message, the third message, and the like, refer to the foregoing method embodiments. Details are not described one by one herein again.

It may be understood that for more detailed descriptions of the transceiver unit 10 and the processing unit 20, refer to the related descriptions in the method embodiment shown in FIG. 7.

FIG. 9 is another diagram of a structure of a communication apparatus according to an embodiment of this application. As shown in FIG. 9, the communication apparatus includes a processor 910 and an interface circuit 920. The processor 910 and the interface circuit 920 are coupled to each other. It may be understood that the interface circuit 920 may be a transceiver or an input/output interface. Optionally, the communication apparatus may further include a memory 930, configured to: store instructions executed by the processor 910, store input data for the processor 910 to run instructions, or store data generated after the processor 910 runs instructions.

When the communication apparatus is configured to implement the method shown in FIG. 6 or FIG. 7, the processor 910 is configured to implement a function of the foregoing processing unit 20, and the interface circuit 920 is configured to implement a function of the foregoing transceiver unit 10.

When the communication apparatus is a chip used in a terminal, the chip in the terminal implements a function of the first communication apparatus or the second communication apparatus in the foregoing method embodiments. The chip in the terminal receives information from another module (for example, a radio frequency module or an antenna) in the terminal, where the information is sent by another terminal to the terminal. Alternatively, the chip in the terminal sends information to another module (for example, a radio frequency module or an antenna) in the terminal, where the information is sent by the terminal to another terminal.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in this embodiment of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. In an example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may exist in the base station or the terminal as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink information exchange method, comprising:
receiving, by a first communication apparatus, a first message from a second communication apparatus; and
determining, by the first communication apparatus based on the first message, whether to send a second message to the second communication apparatus, wherein the second message comprises channel occupancy time COT sharing information.

2. The method according to claim 1, wherein the first message comprises channel access priority class CAPC information, and the CAPC information is used to determine a second CAPC of the second communication apparatus; and
the determining, by the first communication apparatus based on the first message, whether to send a second message to the second communication apparatus comprises:
determining, by the first communication apparatus based on the second CAPC and a first CAPC, whether to send the second message to the second communication apparatus, wherein the first CAPC is a CAPC used by the first communication apparatus to obtain COT.

3. The method according to claim 2, wherein the determining, by the first communication apparatus based on the second CAPC and a first CAPC, whether to send the second message to the second communication apparatus comprises:
if a priority corresponding to the second CAPC is higher than a priority corresponding to the first CAPC, or a priority corresponding to the second CAPC is the same as a priority corresponding to the first CAPC, determining, by the first communication apparatus, to send the second message to the second communication apparatus; or
if a priority corresponding to the second CAPC is lower than a priority corresponding to the first CAPC, determining, by the first communication apparatus, not to send the second message to the second communication apparatus.

4. The method according to claim 2 or 3, wherein the CAPC information comprises a type of information to be transmitted by the second communication apparatus; and
the type of the information comprises one or more of the following: a sidelink SL medium access control MAC control element CE, an SL signaling radio bearer SRB, or an SL data radio bearer DRB.

5. The method according to any one of claims 1 to 4, wherein the first message comprises a COT sharing request indication, used to request the first communication apparatus to provide the COT sharing information.

6. The method according to any one of claims 1 to 5, wherein the first message comprises information about a first resource, and the information about the first resource indicates that a resource indicated by the COT sharing information is within the first resource.

7. The method according to claim 1, wherein the determining, by the first communication apparatus based on the first message, whether to send a second message to the second communication apparatus comprises:
if a channel busy ratio CBR obtained by the first communication apparatus through measurement is less than or equal to a CBR threshold, determining, by the first communication apparatus, to send the second message to the second communication apparatus; or
if a CBR obtained by the first communication apparatus through measurement is greater than the CBR threshold, determining, by the first communication apparatus, not to send the second message to the second communication apparatus.

8. The method according to claim 7, wherein the first message comprises CBR threshold information, and the CBR threshold information is used to determine the CBR threshold.

9. The method according to any one of claims 1 to 8, wherein the second message further comprises one or more of the following: first indication information or second indication information, wherein
the first indication information indicates whether the COT sharing information is used for sidelink transmission with the first communication apparatus; and the second indication information indicates a physical channel to which the COT sharing information is applied.

10. A sidelink information exchange method, comprising:
sending, by a second communication apparatus, a first message to a first communication apparatus, wherein the first message is used to determine whether to send a second message to the second communication apparatus;
receiving, by the second communication apparatus, the second message sent by the first communication apparatus, wherein the second message comprises COT sharing information; and
performing, by the second communication apparatus, sidelink communication based on the COT sharing information.

11. The method according to claim 10, wherein the performing, by the second communication apparatus, sidelink communication based on the COT sharing information comprises:
sending, by the second communication apparatus, sidelink data to the first communication apparatus based on the COT sharing information.

12. The method according to claim 10 or 11, wherein after the receiving, by the second communication apparatus, the second message sent by the first communication apparatus, the method further comprises:
sending, by the second communication apparatus, a third message to a network device, wherein the third message comprises the COT sharing information.

13. The method according to any one of claims 10 to 12, wherein after the performing, by the second communication apparatus, sidelink communication based on the COT sharing information, the method further comprises:
sending, by the second communication apparatus, a sidelink SL buffer status report BSR to the network device, wherein the SL BSR is an SL BSR of to be transmitted information that is remained after the sidelink communication is performed by using the COT sharing information.

14. The method according to any one of claims 10 to 13, wherein the first message comprises channel access priority class CAPC information, and the CAPC information is used to determine a second CAPC of the second communication apparatus.

15. The method according to claim 14, wherein the CAPC information comprises a type of information to be transmitted by the second communication apparatus; and
the type of the information comprises one or more of the following: an SL medium access control MAC control element CE, an SL signaling radio bearer SRB, or an SL data radio bearer DRB.

16. The method according to any one of claims 10 to 15, wherein the first message comprises a COT sharing request indication, used to request the first communication apparatus to provide the COT sharing information.

17. The method according to any one of claims 10 to 16, wherein the first message comprises information about a first resource, and the information about the first resource indicates that a resource indicated by the COT sharing information is within the first resource.

18. The method according to any one of claims 10 to 17, wherein the first message comprises CBR threshold information, and the CBR threshold information is used to determine a CBR threshold.

19. The method according to any one of claims 10 to 18, wherein the second message further comprises one or more of the following: first indication information or second indication information, wherein
the first indication information indicates whether the COT sharing information is used for sidelink transmission with the first communication apparatus; and the second indication information indicates a physical channel to which the COT sharing information is applied.

20. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 9 or any one of claims 10 to 19 by using a logic circuit or by executing code instructions.

21. A computer-readable storage medium, wherein the storage medium stores a computer program or instructions, and when the computer program or the instructions are executed by a communication apparatus, the method according to any one of claims 1 to 9 or any one of claims 10 to 19 is implemented.
